# DEMANDE DE BREVET EUROPEEN

(11) **EP 1 339 192 A2**
(43) Date de publication de la demande: **27.08.2003**
(21) Numéro de dépôt: 02078536.6
(22) Date de dépôt: 27.10.1999
(51) Int. Cl.: H04L 12/56

(54) **Procédé d'allocation de ressources à chaque émetteur connecté à un récepteur via un même lien de transmission**

(30) Priorité: 05.11.1998 FR 9813977
(62) Demande divisionnaire de: 99402675.5
(71) Demandeur: Mitsubishi Electric Information Technology Centre Europe B.V., 1119 NS Schiphol Rijk (NL)
(72) Inventeur: Seguin, Laure, 35700 Rennes (FR)
(74) Mandataire: Maillet, Alain

(57) **Abrégé**

La présente invention concerne un procédé d'allocation de ressources à un émetteur connecté à un récepteur via un lien de transmission, lesdites ressources étant définies, pour les canaux utilisés par ledit émetteur, par un ensemble de combinaisons de formats de transport pour les données sur ledit lien de transmission.

Le procédé selon l'invention est caractérisé en ce qu'une pluralité d'ensembles de combinaisons de formats de transport ayant été alloués audit émetteur au début de la connexion audit récepteur, chaque ensemble de combinaisons de formats de transport étant un sous-ensemble de l'ensemble des combinaisons possibles des formats de transport associés aux dits canaux, le récepteur autorise un ensemble de combinaisons de formats de transport appartenant à ladite pluralité, selon les conditions de transport sur le lien de transmission.

## Description

La présente invention concerne un procédé d'allocation de ressources à chaque émetteur connecté à un récepteur via un même lien de transmission. Ce procédé est notamment destiné à être mis en oeuvre dans un système de communication sans fil, tel qu'un système de communication de téléphonie sans fil.

Un système de communication est généralement constitué, d'une part, d'au moins un réseau de plusieurs noeuds interconnectés et, d'autre part, de terminaux qui peuvent se connecter par des liens de transmission, par exemple par des liens radio, à chacun de ces noeuds. La capacité de chaque lien de transmission du ou des réseaux d'un système de communication est nécessairement limitée. Dans les systèmes TDMA, tous les utilisateurs connectés à un noeud du réseau partagent des intervalles de temps nécessairement en nombre limité. Dans les systèmes CDMA, les utilisateurs peuvent émettre en même temps, mais le débit que chacun utilise est limité par les interférences qu'ils se créent mutuellement. Ainsi, les utilisateurs connectés à un noeud du réseau se partagent la ressource radio sur ce noeud qui est nécessairement limitée.

Chaque utilisateur veut, en outre, disposer à un instant **t** d'un ensemble de services avec différentes classes de qualité de service (QoS = Quality of Service). Chacune de ces classes de qualité de service spécifie les valeurs d'un certain nombre de paramètres tels que le taux d'erreurs de bits, le délai de transfert, la garantie ou non d'un débit minimum, paramètres qui sont liés aux ressources à affecter à l'utilisateur considéré et que le système de communication s'engage à respecter.

Le processus d'allocation de ressources consiste à allouer à chaque utilisateur les ressources nécessaires pour qu'il puisse disposer des services et des classes de qualité de service qu'il a demandés tout en partageant entre les différents utilisateurs la capacité disponible du lien de transmission par lequel il est connecté au réseau.

Ainsi, le processus d'allocation de ressources a deux rôles à remplir : d'une part, garantir aux différents utilisateurs la qualité de service qu'ils ont requis et, d'autre part, utiliser au mieux l'ensemble de la bande passante de chacun des liens de transmission impliqués dans la communication.

Les objectifs de ces deux rôles sont contradictoires. En effet, le premier a tendance à sous-utiliser la bande passante car il peut chercher à garder de la bande passante disponible pour un utilisateur même si celui-ci ne transmet pas. Quant au second, au contraire, il peut chercher à chaque fois qu'un premier utilisateur transmet moins, à permettre à un second d'utiliser la bande passante non utilisée par le premier.

L'allocation de ressources est donc un processus qui consiste à faire un compromis entre réservation de ressources et réutilisation des ressources non utilisées. Le processus d'allocation de ressources est généralement aussi dynamique que possible afin de permettre une utilisation optimisée de la capacité des liens de transmission.

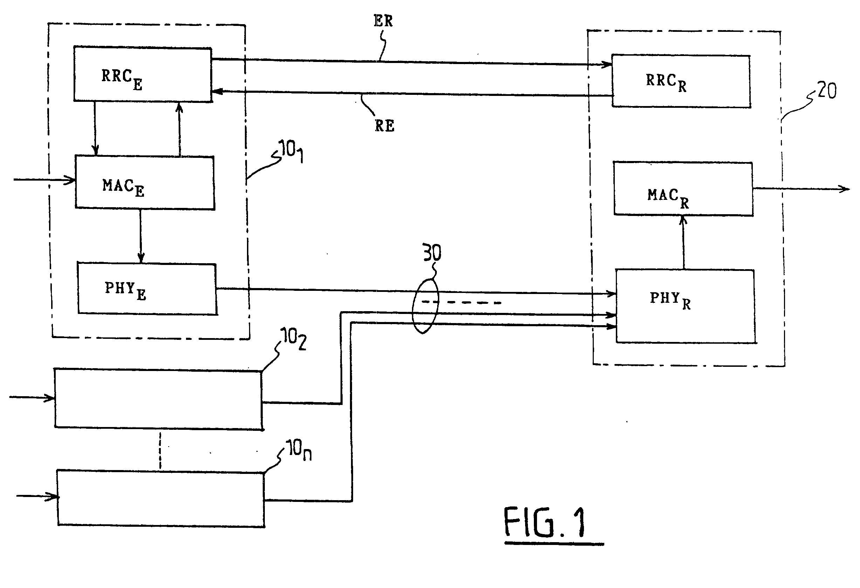

D'une manière générale, les fonctions mises en oeuvre dans chaque élément (terminal, noeud de réseau, etc.) d'un système de communication sont généralement hiérarchisées sous la forme de couches superposées, chacune d'elles mettant en oeuvre un certain nombre de fonctions sous-ensemble de l'ensemble des fonctions de communication. Généralement, dans chacun des deux éléments susceptibles d'être en communication l'un avec l'autre par un lien de transmission radio, trois couches sont considérées, comme cela est visible à la Fig. 1.

Sur cette Fig. 1, on a représenté un émetteur 10 susceptible de transmettre des informations à un récepteur 20 et, ce, par l'intermédiaire d'un lien de transmission radio 30. On notera ici que le récepteur 20 pourrait constituer un noeud d'un réseau auquel plusieurs émetteurs tels que l'émetteur 10 pourraient se connecter. Chaque émetteur connecté et en particulier l'émetteur 10 doit donc partager la capacité du ou des liens de transmission qui se trouvent en aval dudit récepteur 20.

A la Fig. 1, on a représenté **n** émetteurs 10₁ à 10ₙ qui sont connectés à un récepteur 20 constituant, par exemple un noeud d'un réseau par un même lien de transmission 30 dont ils partagent les ressources. Plus précisément, chaque émetteur 10ᵢ (i variant de 1 à **n**) (en particulier l'émetteur 10₁ sur la Fig. 1) se présente sous la forme de trois couches RRC_{E}, MAC_{E} et PHY_{E} et le récepteur 20 se présente lui-aussi sous la forme de trois couches RRC_{R}, MAC_{R} et PHY_{R}.

De manière générale, la couche physique PHY d'un élément est en charge du traitement des données de façon qu'elles puissent être transmises sur ou reçues du lien de transmission 30 par lequel il est relié à un autre élément. La couche de contrôle d'accès au milieu MAC (Medium Access Control) est en charge de l'accès au lien de transmission 30 considéré mais aussi au contrôle de cet accès. Les données que reçoit cette couche sont mises en forme, configurées et transmises à la couche physique pour leur transmission sur le lien. La couche PHY peut également lui passer des données en réception.

La couche MAC met par exemple en forme ces données en blocs de données encore appelés blocs de transport et les transmet à la couche physique PHY en émission. A l'inverse, la couche PHY peut également lui passer des blocs de transport en réception.

La couche supérieure qui est la couche de contrôle des ressources radio RRC (Radio Ressources Control) s'occupe de gérer l'ensemble des ressources physiques et de faire respecter la classe de qualité de services QoS des services des différents utilisateurs du même lien. Elle transmet pour ce faire des informations à la couche inférieure MAC qui contrôle l'accès au lien physique.

Ainsi, à la Fig. 1, les informations que l'émetteur 10₁ veut transmettre sont configurées par la couche MAC_{E} et sont ensuite passées sous forme de blocs de données à la couche PHY_{E} pour être transmises sur le lien de transmission 30 vers la couche physique PHY_{R} du récepteur 20. Ces données sont ensuite transmises à la couche d'accès MAC_{R} du récepteur 20 qui les réémet sur le réseau dont il est un noeud.

Quant aux couches supérieures RRC_{E} et RRC_{R}, elles échangent des messages permettant la mise en oeuvre du processus d'allocation des ressources sur le lien 30.

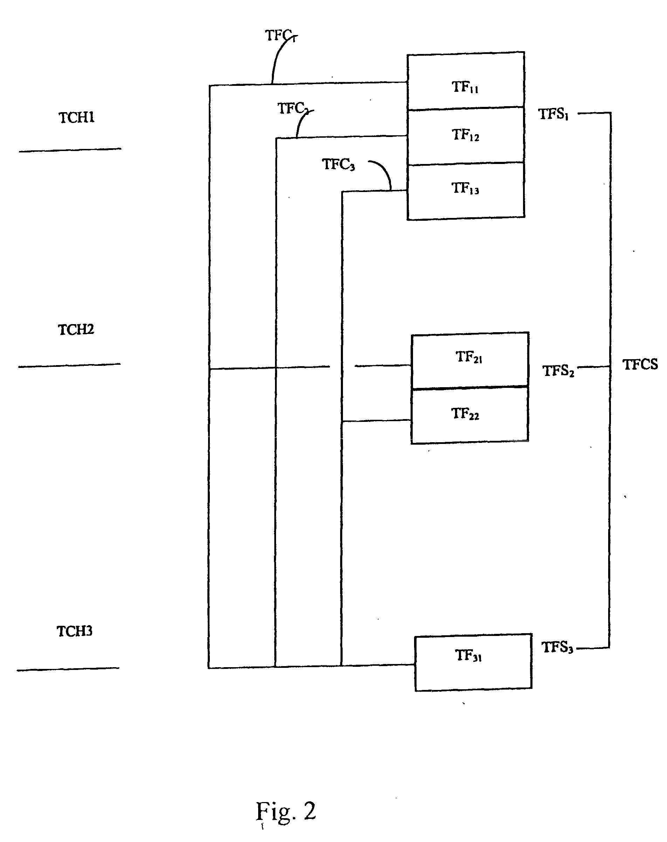

Pour l'allocation de ressources, on a défini les notions de format de transport TF (Transport Format), de combinaison de formats de transport TFC (Transport Format Combination) et d'ensemble de combinaisons de formats de transport TFCS (Transport Format Combination Set). Les définitions de ces notions sont données en relation avec la Fig. 2.

Le format de transport est défini comme un format offert par la couche PHY à la couche MAC pour la livraison d'un ensemble de blocs de transport sur un canal donné utilisé par un émetteur pendant un intervalle de temps de transmission. Le format de transport est défini au moyen d'une partie dynamique et d'une partie semi-statique. Les attributs de la partie dynamique sont, d'une part, la taille de chaque bloc de transport et, d'autre part, la taille de l'ensemble des blocs de transport à livrer. Les attributs de la partie semi-statique sont l'intervalle de temps de transmission pour la livraison d'un ensemble de blocs de transport, le type de codage du canal, etc.

Un ensemble de formats de transport (TFS) est l'ensemble de formats de transport associé à un canal de transport donné utilisé par un émetteur. Les parties semi-statiques de tous les formats de transport d'un même ensemble de formats de transport sont les mêmes.

A la Fig. 2, à trois canaux transport TCH1, TCH2 et TCH3 utilisés par un émetteur, sont respectivement affectés les ensembles de formats de transport TFS₁, TFS₂ et TFS₃, eux-mêmes respectivement constitués des formats de transport TF₁₁, TF₁₂, TF₁₃, TF₂₁, TF₂₂ et TF₃₁. Par exemple, le format de transport TF₁₁ est défini par une taille de bloc de 160 bits et par un seul bloc par intervalle de temps et le format TF₂₂ par une taille de bloc de 320 bits et de quatre blocs par intervalle de temps. La partie semi-statique de l'ensemble de formats de transport TFS₁ définit l'intervalle de temps à 10ms, un codage interne, etc.

La combinaison de formats de transport (TFC) est définie comme la combinaison des formats de transport qui sont en cours de validité sur tous les canaux de transport d'un émetteur. Elle contient un format de transport par canal de transport.

Un ensemble de combinaisons de formats de transport (TFCS) est défini comme un ensemble de combinaisons de formats de transport qui peuvent être utilisées par l'émetteur.

A la Fig. 2, on peut voir trois combinaisons de transport TFC₁, TFC₂ et TFC₃ qui à elles trois, forment l'ensemble de combinaisons de formats dénommé TFCS.

Au début de la communication, un ensemble de combinaisons de formats de transport TFCS est autorisé par la couche supérieure RRC. Cet ensemble TFCS correspond généralement à un débit maximum global que le système garantit, d'une part, et que l'utilisateur s'engage à ne pas dépasser, d'autre part. A chaque intervalle de temps, la couche de contrôle d'accès MAC choisit la combinaison de formats de transport (TFC₁, TFC₂ ou TFC₃) parmi celles qui sont définies dans l'ensemble TFCS autorisé lors de la connexion. A l'intérieur de la combinaison choisie, la couche MAC peut choisir librement les formats qu'elle estime bons, compte tenu de l'état du trafic au niveau de l'émetteur.

On notera que puisque seule la partie semi-statique d'un format de transport change entre deux combinaisons de formats de transport, la couche de contrôle d'accès MAC n'a en fait contrôle que sur cette partie dynamique. Ainsi, les paramètres de la partie semi-statique sont garantis par la couche supérieure RRC.

La sélection des combinaisons de formats de transport TFC par la couche de contrôle d'accès peut être vue comme la partie rapide du contrôle de ressource radio. Le fait de dédier cette tâche à une couche qui est proche de la couche physique PHY, permet d'utiliser de façon flexible les possibilités de débit variable que la couche physique PHY permet. Cet aspect du contrôle de ressource radio devrait être distingué des parties plus lentes gérées par la couche supérieure RRC. De ce fait, le débit peut être changé très rapidement.

En réalité, pour que le processus d'allocation de ressources soit le plus dynamique possible, un ensemble TFCS doit être renégociable en cours de communication. Or, cette opération s'avère nécessiter une procédure assez lourde et peu dynamique.

De plus, dans le cas de trafic à débit variable avec débit instantané maximum non garanti (trafic couramment nommé VBR comme Variable Bit Rate = débit de bits variable), l'allocation d'un ensemble de combinaisons TFCS ne tenant en compte que du débit instantané maximum (Peak Bit Rate : PBR) mènerait à une sous-utilisation de la bande passante. De même, il n'est pas possible de réserver de la bande passante pour des services UBR (Unspecified Bit Rate = débit de bits non spécifié), mais en revanche, il est possible d'utiliser de la bande supplémentaire et disponible pour eux.

Un des buts de la présente invention est de proposer un procédé d'allocation de ressources qui permette une flexibilité plus grande et une meilleure utilisation de la bande passante.

L'invention est définie par l'objet de la revendication 1. Des modes avantageux de réalisation sont définies dans les revendications dépendantes.

Les caractéristiques de l'invention mentionnées ci-dessus ainsi que d'autres apparaîtront plus clairement à la lecture de la description suivante de plusieurs modes de réalisation de l'invention, ladite description étant faite en relation avec les dessins joints parmi lesquels :
La Fig. 1 est un schéma synoptique d'un émetteur et d'un récepteur mettant en oeuvre un procédé selon l'état de la technique,
La Fig. 2 est un schéma qui illustre la définition d'un ensemble de combinaisons de formats de transport,
La Fig. 3 est un schéma synoptique d'un émetteur et d'un récepteur mettant en oeuvre un procédé d'allocation de ressources selon l'invention,
La Fig. 4 est un schéma montrant les unités fonctionnelles d'un récepteur mettant en oeuvre un procédé d'allocation de ressources selon l'invention,
La Fig. 5 est un schéma montrant les unités fonctionnelles d'un émetteur mettant en oeuvre un procédé d'allocation de ressources selon l'invention,
La Fig. 6 est un schéma montrant en fonction du temps un exemple de la répartition de la bande entre un émetteur et d'autres émetteurs connectés au même récepteur, et
La Fig. 7 est un schéma montrant l'échange de message entre un émetteur et un récepteur dans la situation exemplative de la Fig. 6.

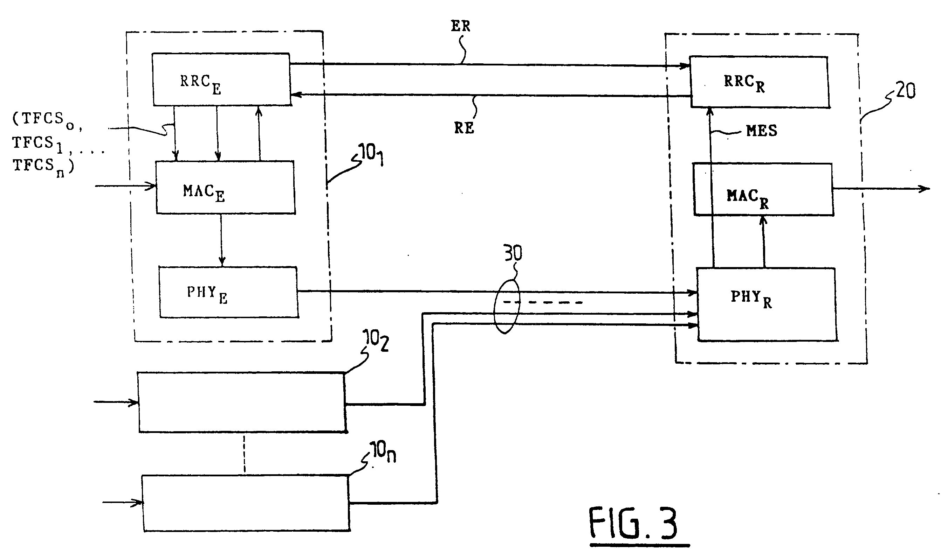

A la Fig. 3, on a représenté des émetteurs 10₁ à 10ₙ susceptibles de transmettre des informations à un récepteur 20 et, ce, par l'intermédiaire d'un même lien de transmission radio 30. On notera ici que le récepteur 20 pourrait constituer un noeud d'un réseau. Chaque émetteur connecté et, en particulier l'émetteur 10₁, doit donc partager la capacité du lien 30.

A la Fig. 3, l'émetteur 10₁ se présente sous la forme de trois couches RRC_{E}, MAC_{E} et PHY_{E} et le récepteur 20 se présente lui aussi sous la forme de trois couches RRC_{R}, MAC_{R} et PHY_{R}.

Les informations que l'utilisateur de l'émetteur 10₁ veut transmettre sont configurées par la couche MAC_{E} et sont ensuite passées sur un canal déterminé sous forme de blocs de données à la couche PHY_{E} pour être transmises sur le lien de transmission 30 vers la couche physique PHYR du récepteur 20. Ces données sont ensuite transmises à la couche d'accès MAC_{R} du récepteur 20.

La couche PHY_{R} du récepteur 20 a connaissance des conditions de transport (définies par exemple par le niveau d'interférences, le taux d'erreurs de bits généralement nommé BER = bits error rate, etc.) sur le lien 30 car elle effectue des mesures et transmet le résultat de ces mesures à la couche de contrôle des ressources RRC_{R} du récepteur 20 (voir flèche marquée MES).

Quant à la couche RRC_{R} du récepteur 20, elle met en oeuvre un procédé d'allocation de ressources qui, en fonction, d'une part, du résultat des mesures MES sur les conditions de transport sur le lien 30 et, d'autre part, des ressources déjà utilisées par d'autres émetteurs 10₁ à 10ₙ connectés sur le récepteur 20, via le même lien 30 détermine un ensemble de combinaisons de formats de transport TFCSₐᵤₜₒ.

Les couches RRC_{E} et RRC_{R} sont prévues pour pouvoir échanger des messages entre elles. Ainsi, comme on le verra par la suite, la couche RRC_{R} du récepteur 20 émet à destination de la couche RRC_{E} de l'émetteur 10 (voir flèche RE) un message l'informant de l'ensemble de combinaisons de formats de transport TFCSₐᵤₜₒ qu'elle a déterminé, comme on l'a vu précédemment, et qu'elle peut donc ainsi autoriser.

Chaque émetteur 10₁ à 10ₙ peut requérir qu'un nouvel ensemble de combinaisons de formats de transport TFCSₐᵤₜₒ lui soit alloué, du fait que les ressources qui lui sont allouées jusqu'ici sont insuffisantes. Pour ce faire, sa couche RRC_{E} émet un message ER en direction de la couche RRC_{R} du récepteur 20 (voir flèche ER).

Selon la présente invention, au moment de la connexion d'un nouvel émetteur sur le récepteur 20, en fonction des ressources qu'il requiert mais aussi des ressources qui sont déjà allouées aux autres émetteurs déjà connectés, la couche RRC_{R} du récepteur 20 alloue à ce nouvel émetteur (supposé être ici l'émetteur 10₁) plusieurs ensembles de combinaisons de formats de transport TFCS₀, TFCS₁, ..., TFCSₙ. Ces ensembles de combinaisons sont passés à la couche de contrôle d'accès MAC_{E} de l'émetteur 10₁, pour leur stockage à des fins d'une utilisation ultérieure, comme cela va être expliqué ci-dessous.

Toutes les combinaisons TFC₁ à TFCₖ qui sont définies dans l'ensemble de combinaisons de formats de transport TFCS₀ correspondent à des ressources minimales que le récepteur 20 peut garantir au nouvel émetteur 10₁. Quant à chaque ensemble de combinaisons de formats de transport TFCSᵢ (avec i = 1 à n), il inclut les différentes combinaisons définies dans l'ensemble de rang juste inférieur TFCSᵢ₋₁ et en comprend d'autres TFCⱼ qui correspondent à des ressources supérieures accordées. Les ressources maximales ainsi définies sont différentes d'un ensemble de combinaisons de formats de transport TFCSᵢ à un autre.

Par exemple, à trois canaux transport TCH1, TCH2 et TCH3, sont respectivement affectés les ensembles de formats de transport TFS₁, TFS₂ et TFS₃ (voir Fig. 2) suivants définis par leur partie dynamique : {20 bits, 1 bloc}; {40 bits, 1 bloc}; {80 bits, 1 bloc}; {160 bits, 1 bloc}, pour le canal de transport TCH1 et {320 bits, 1 bloc}; {320 bits, 2 blocs}; {320 bits, 4 blocs} en ce qui concerne les canaux de transport TCH2 et TCH3. On suppose dans cet exemple que, dans la partie semi-statique, pour chacun de ces canaux un intervalle d'entrelacement de 10 ms est déterminé. On ne tient pas compte ici, à titre de simplification, du type codage.

Par exemple, le canal TCH1 est un canal du type mode voix à codage variable pour lequel un débit de 2 kbits/s doit être garanti. Le canal TCH2 est un canal à débit de bits variable, dit VBR (Variable Bit Rate), pour lequel un débit minimal de 32 kb/s doit par exemple être garanti et le canal TCH3 est un canal à débit non spécifié, dit UBR, pour lequel rien n'est garanti.

On peut constater que le débit minimal à garantir est donc de 34 kb/s : (20 bits tous les 10ms pour le canal TCH1 + 320 bits tous les 10ms pour le canal TCH2

Un ensemble de combinaisons de formats de transport minimal TFCS₀ du type de celui qui suit peut être défini:
Combinaison 1 : pour le canal TCH1 {20 bits, 1 bloc}, le canal TCH2 {320 bits, 1 bloc}, pas de données sur le canal TCH3;
Combinaison 2 : pour le canal TCH1 {20 bits, 1 bloc}, pas de données sur le canal TCH2, et pour le canal TCH3 {320 bits, 1 bloc}
Combinaison 3 : pas de données sur le canal TCH1, pour le canal TCH2 {320 bits, 1 bloc}, pas de données sur TCH3.

Dans cet exemple, le débit maximal ainsi défini est égal au plus au débit minimal garanti, soit : (20+320) bits/10 ms = 34 kb/s

Un autre ensemble de combinaisons de formats de transport TFCS₁ est également défini dès le début de la communication. Il inclut l'ensemble de combinaisons de formats de transport TFCS₀ qui permet de garantir le débit minimal de 34 kbits/s mais également une combinaison TFC₄ correspondant par exemple à un débit maximal de 84 kbits/s. Dans ce cas l'ensemble de combinaisons de formats de transport TFCS₁ pourrait être du type :
Combinaison 1 : pour le canal TCH1 {20 bits, 1 bloc}, le canal TCH2 {320 bits, 1 bloc}, pas de données sur le canal TCH3;
Combinaison 2 : pour le canal TCH1 {20 bits, 1 bloc}, pas de données sur le canal TCH2, et pour le canal TCH3 {320 bits, 1 bloc}
Combinaison 3 : pas de données sur le canal TCH1, pour le canal TCH2 {320 bits, 1 bloc}, pas de données sur TCH3.
Combinaison 4 : pour le canal TCH1 {20 bits, 1 bloc}, pour le canal TCH2 {320 bits, 1 bloc}, et pour le canal TCH3{320 bits, 1 bloc}.

Ainsi, un certain nombre d'ensemble de combinaisons de formats de transport TFCSᵢ est défini en fonction d'un certain nombre de débits maximaux envisagés, tout en garantissant toujours le minimum.

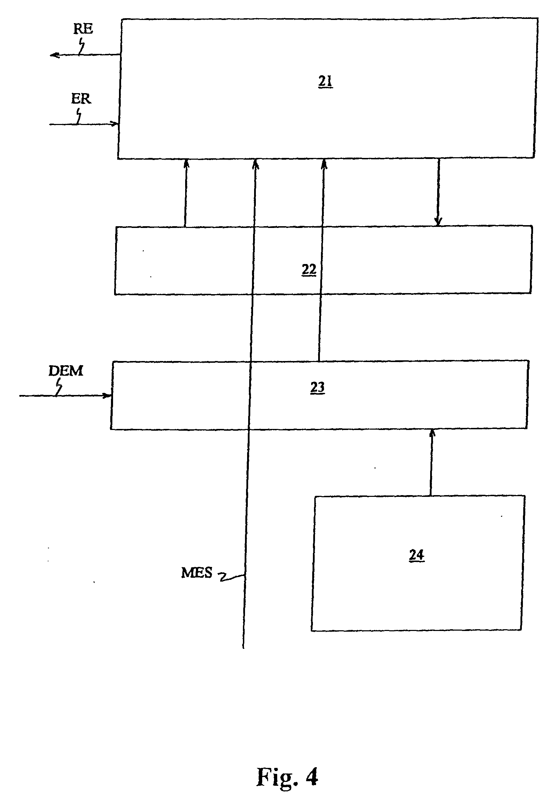

On a représenté à la Fig. 4, les unités qui composent la couche RRC_{R} du récepteur 20 et qui sont impliquées dans le processus d'allocation de ressources. Une unité 21 est prévue pour déterminer l'ensemble de combinaisons de formats TFCSₐᵤₜₒ qui est autorisé selon, d'une part, les ensembles de combinaisons de formats TFCS qui sont en cours d'utilisation par tous les émetteurs connectés au récepteur 20, ensembles qui sont déterminés par une unité 22, et, d'autre part, les résultats des mesures MES effectuées sur la couche PHY (voir Fig. 3). Ainsi, l'unité 21 transmet à la couche RRC_{E} de l'émetteur 10₁, à sa demande comme on le verra par la suite, dans des messages RE, l'ensemble de combinaisons de formats TFCSₐᵤₜₒ qui est autorisé pour les périodes de temps suivantes.

Une unité de contrôle d'admission 23 accorde ou pas une nouvelle demande de service émanant d'un émetteur qui souhaite se connecter au récepteur 20. Selon une caractéristique de l'invention, ce processus tient compte, non pas des ensembles de combinaisons de formats qui sont actuellement autorisés pour les différents émetteurs déjà connectés, mais des ensembles de combinaisons de formats TFCS₀ qui ont été négociés au début des connexions respectives de ces émetteurs. On rappelle que l'ensemble de combinaisons de formats TFCS₀ est celui qui correspond au minimum de services et qui représente une garantie de ressources pour l'émetteur considéré. Les ensembles de combinaisons de formats TFCS₀ des émetteurs connectés au récepteur 20 sont connus d'une unité 24.

Lorsque la demande de connexion d'un nouvel émetteur est acceptée, un processus de négociation est mis en oeuvre par l'unité 23 qui détermine alors un groupe d'ensembles de combinaisons de formats de transport TFCS₀, TFCS₁, ..., TFCSₙ qui est alors transmis à l'unité 21. Celle-ci transmet également ce groupe à ce nouvel émetteur 10₁.

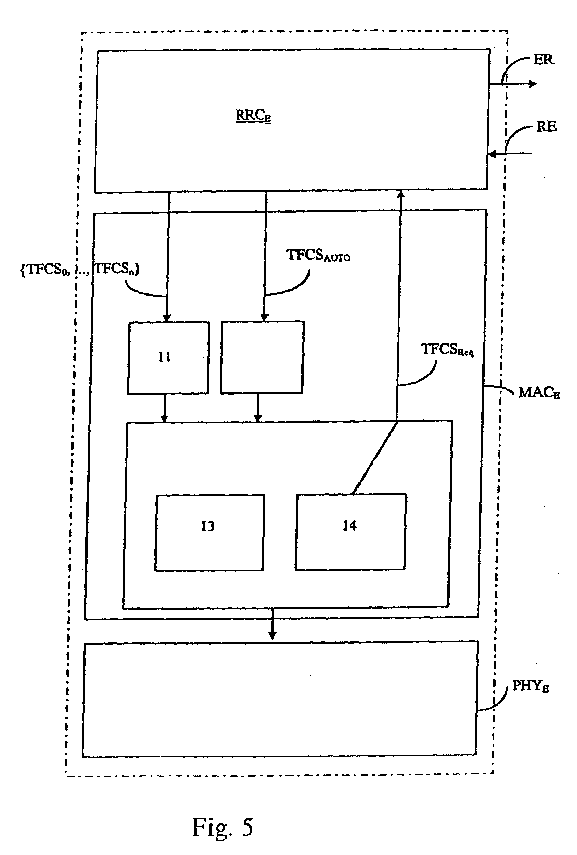

On a représenté à la Fig. 5, les trois couches RRC_{E}, MAC_{E} et PHY_{E} qui concernent l'allocation de ressources de l'émetteur 10₁, ainsi que les unités qui composent la couche de contrôle d'accès MACE.

Comme cela vient d'être décrit, au début de la connexion, plusieurs ensembles de combinaisons de formats de transport TFCS₀, TFCS₁, ..., TFCSₙ sont négociés entre les couches RRC_{R} et RAC_{E}. Ces ensembles de combinaisons sont passés à la couche de contrôle d'accès MAC_{E} de l'émetteur 10₁ et sont par exemple stockés dans une unité 11 (voir Fig. 5).

La couche RAC_{E} reçoit les messages RE et passe l'ensemble de combinaisons de formats TFCSₐᵤₜₒ autorisé à la couche inférieure MAC_{E} où il est stocké dans l'unité 12. L'unité 13 prend en compte la valeur de l'ensemble TFCSₐᵤₜₒ stockée dans l'unité 12 pour déterminer, toutes les trames, la combinaison de formats à utiliser par la couche PHY_{E}. Cette unité 13 détermine, en fonction de l'ensemble de combinaisons de formats TFCSₐᵤₜₒ courant la combinaison de formats de transport TFC la plus appropriée. La couche MACE est donc maintenant en mesure de mettre en forme les données qu'elle reçoit selon l'application concernée et de les passer au canal correspondant à la couche PHY_{E} pour leur transport vers le récepteur 20.

La couche MACE comprend encore une unité 14 qui est prévue pour déterminer si l'ensemble de combinaisons de formats TFCSₐᵤₜₒ courant est adapté aux conditions de trafic actuelles sur le lien 30. Cette détermination est par exemple faite sur la base de l'état d'occupation des mémoires tampon en amont de la couche MAC_{E}.

Si l'ensemble de combinaisons de formats TFCSₐᵤₜₒ en cours n'est pas suffisant au moment considéré, l'unité 14 émet, à destination de la couche RAC_{E}, une requête d'un nouvel ensemble de combinaisons de formats TFCS_{req}. Cette requête TFCS_{req} est passée de la couche supérieure RAC_{E}, qui forme un message ER, à la couche RRC_{R}. Celle-ci essaie de répondre à la demande de l'émetteur contenu dans ce message RE dès que possible (voire jamais si cela n'est pas possible). Pour répondre, elle transmet un nouvel ensemble de combinaisons de formats TFCSₐᵤₜₒ.

Selon l'invention, la requête TFCS_{req} correspond à l'un des ensembles de combinaisons de formats de transport TFCS₀, TFCS₁, ..., TFCSₙ qui ont été négociés entre la couche RRC_{R} du récepteur 20 et la couche RRC_{E} de l'émetteur 10 au moment de l'établissement de la connexion entre eux.

Ainsi, si, selon l'évolution du trafic au vu de l'état de remplissage des mémoires tampon de la couche MAC_{E}, celle-ci souhaite des ressources plus importantes, elle établit la requête TFCS_{req} la plus appropriée pour la transmettre à la couche RAC_{E}.

Par exemple, dans l'exemple mentionné ci-dessus, si le canal TCH2 a besoin d'une augmentation de débit pour envoyer des données à un débit de 64 kbits/s, la couche MAC_{E} établira une requête TFCS_{req} qui correspondra à l'ensemble de combinaisons de formats TFCS₁. Si elle est acceptée par la couche RRC_{R} du récepteur 20, la couche MAC_{E} choisira la combinaison 1 égale à, pour le canal TCH1,{20 bits, 1 bloc} et, pour le canal TCH2, {320 bits, 2 blocs}.

On notera que le message RE peut être un pointeur sur un ensemble de combinaisons de formats de transport TFCS donné parmi les ensembles TFCS₀ à TFCSₙ qui ont été négociés au moment de la connexion. Lorsqu'il reçoit ce pointeur, l'émetteur 10₁ peut en déduire l'ensemble TFCSᵢ pointé et donc l'ensemble TFCSₐᵤₜₒ.

Il en est de même du message ER qui peut être un pointeur sur un ensemble de combinaisons de formats de transport TFCS donné parmi les ensembles TFCS₀ à TFCSₙ. A sa réception, le récepteur 20 peut en déduire l'ensemble TFCSᵢ pointé et donc l'ensemble TFCS_{req}.

Selon une variante de réalisation de l'invention, l'émetteur 10₁ ne transmet pas, dans le message ER, un ensemble requis TFCS_{req} ou un pointeur sur l'ensemble requis TFCS_{req} mais des informations sur les conditions de l'état d'occupation de ses mémoires tampon. De plus, selon cette variante, les ensembles de combinaisons de formats de transport qui ont été négociés lors de l'établissement de la connexion TFCS₀ à TFCSₙ sont stockés dans une unité du récepteur 20.

Lorsque les conditions d'occupation des mémoires de l'émetteur 10₁ sont changées, l'émetteur 10₁ transmet au récepteur 20, sous la forme d'un message ER, des informations sur ces nouvelles conditions. Le récepteur 20, s'il peut les prendre en compte, détermine alors l'ensemble de combinaisons de formats le plus approprié compte tenu des conditions d'exploitation du lien 30 et des ensembles de combinaisons de formats déjà attribués aux autres émetteurs connectés sur le récepteur 20. Cet ensemble est choisi parmi les ensembles TFCS₀ à TFCSₙ. Le récepteur 20 transmet alors à l'émetteur 10₁, sous la forme d'un message RE, l'ensemble de combinaisons de formats de transport autorisé TFCSₐᵤₜₒ.

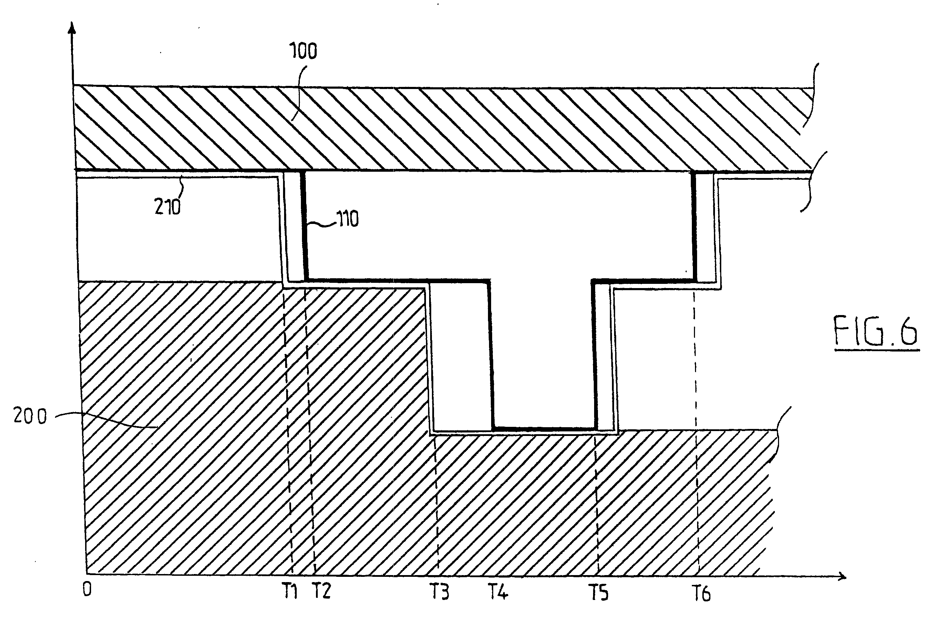

On a représenté à la Fig. 6 un diagramme montrant l'occupation de la bande passante disponible sur le récepteur 20 en fonction du temps dans une situation exemplative.

Au début de la connexion de l'utilisateur de l'émetteur 10, la couche RRC_{R} du récepteur 20 prend en compte sa demande. L'unité 23 du récepteur met en oeuvre son algorithme de contrôle d'admission d'appel qui lui garantit une portion de la bande passante par l'allocation d'un ensemble de combinaisons de formats TFCS₀. A la Fig. 6, cette bande passante garantie correspond à la partie 100 hachurée inclinée vers la droite. Elle lui alloue aussi d'autres ensembles de combinaisons de formats TFCS₁ à TFCSₙ pour pouvoir éventuellement bénéficier de la bande supplémentaire.

Au temps t = 0, une partie de la bande passante est déjà garantie aux autres utilisateurs (partie 200 hachurée inclinée vers la gauche). Comme il y a de la bande disponible, ces utilisateurs profitent même de plus de bande passante (la bande passante utilisée par les autres utilisateurs est la partie encadrée par le double trait 210 et qui est donc toujours au-dessus de la partie hachurée 200) que celle qui leur est garantie.

Un peu avant le temps T₁, l'utilisateur de l'émetteur 10₁ constate un début de congestion (sur-occupation des mémoires tampons en amont de la couche MAC_{E}) et établit une requête d'un ensemble de combinaisons TFCS lui autorisant une bande passante supérieure. Cette requête correspond à un des ensembles de combinaisons qui a fait l'objet de la négociation au moment de la connexion.

On suppose ici que la couche RRC_{R} considère cette demande comme prioritaire si bien qu'au temps T₁, elle décide de libérer de la ressource pour permettre à l'utilisateur de l'émetteur 10₁ de transmettre à un débit plus élevé. Pour ce faire, elle abaisse la bande des autres utilisateurs à leurs ensembles de combinaisons de formats TFCS₀ respectifs et envoie, un laps de temps après, c'est-à-dire au temps T₂, un message RE indiquant à l'émetteur 10₁ qu'il peut utiliser l'ensemble de format TFCS₁. A la Fig. 6, la bande utilisée par l'émetteur 10₁ se trouve au dessus du trait fort 110.

Au temps T₃, un utilisateur se déconnecte et la bande qui lui était réservée se libère. La partie hachurée 200 s'abaisse. La bande utilisée par les autres utilisateurs diminue également.

On suppose qu'un peu avant le temps T₄, l'émetteur 10₁ se retrouve de nouveau en état de congestion si bien qu'il redemande l'utilisation d'un ensemble de format de niveau plus élevée, en l'occurrence l'ensemble TFCS₂.

La couche RRC_{R} du récepteur 20 lui accorde, au temps T₄, au moyen d'un message RE lui autorisant l'utilisation de TFCS₂.

On notera que s'il y avait eu un ensemble de combinaisons de formats TFCS de niveau encore supérieur, par exemple TFCS₃, et que l'émetteur 10 en avait requis l'utilisation, la couche RRC_{R} ne lui aurait pas accordé, car même si la partie de la bande passante 200 n'est pas réellement utilisée par les autres utilisateurs, elle est néanmoins garantie et elle est donc non utilisable par lui.

Un peu avant le temps T₅, la couche RRC_{R} du récepteur 20 a reçu une demande des autres utilisateurs pour une augmentation de débit et a considéré cette demande comme prioritaire. Au temps T₅, il envoie donc à l'émetteur 10₁ un message RE ne lui autorisant plus que l'utilisation de l'ensemble TFCS₁. De même au temps T₆, où elle ne lui autorise plus que l'utilisation de l'ensemble TFCS₀.

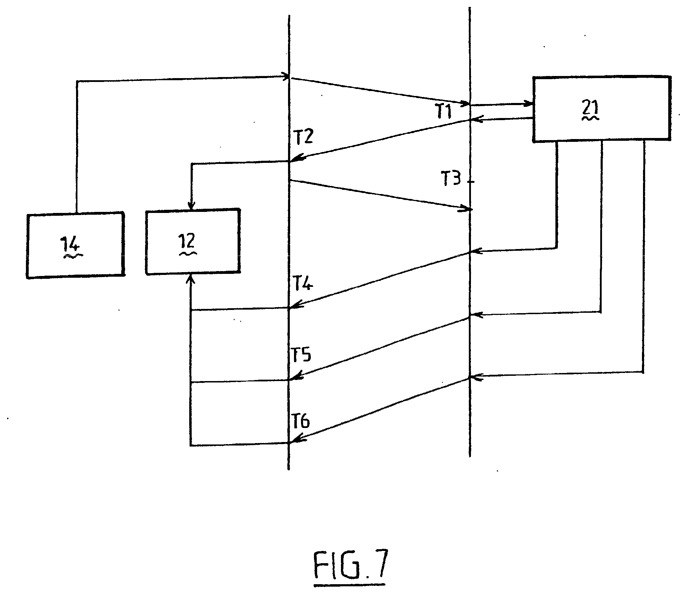

La Fig. 7 illustre l'échange de messages entre l'émetteur 10₁ et le récepteur 20 dans la période de temps qui correspond à celle de la Fig. 6.

Sur la base de l'état d'occupation des mémoires tampons de l'émetteur 10, l'unité 14 (voir Fig. 5) se rend compte que l'ensemble de combinaisons de formats TFCSₐᵤₜₒ actuellement utilisé n'est pas suffisant pour ses besoins. Elle requiert donc à la couche RRC_{E} une demande d'un ensemble de format TFCS de niveau supérieur. La couche RRC_{E} envoie cette demande sous la forme d'un message ER à la couche RRC_{R} du récepteur 20 et, ce un peu avant le temps T₁. A sa réception, cette demande est prise en compte par l'unité 21 du récepteur 20 (voir Fig. 4), en même temps que les mesures MES effectuées sur le lien 30 et que les ensembles de combinaisons de formats TFCS en cours d'utilisation par les autres utilisateurs stockés dans l'unité 22.

Pour des raisons de priorités, cette unité 21 décide d'accorder de la bande passante supplémentaire à l'émetteur 10 et, pour ce faire, de diminuer celle des autres. Au temps T₁, elle envoie donc des messages de diminution de TFCS aux autres utilisateurs qui obéissent (non représenté sur la Fig. 7) et, au temps T₂, elle envoie sous forme d'un message RE, l'ensemble TFCSₐᵤₜₒ autorisé (en l'occurrence TFCS₁). La couche RRC_{E} envoie ce message RE à l'unité 12 qui le stocke en tant que l'ensemble TFCSₐᵤₜₒ autorisé en cours. L'unité 13 qui calcule périodiquement, par exemple toutes les 10 ms, la combinaison de formats TFC à utiliser, prend cette donnée en compte pour la détermination de la combinaison de formats TFC pour la période de temps suivante et, vu l'état de ses mémoires, augmente le débit.

Au temps T₃, un utilisateur se déconnecte, ce qui a pour conséquence de réactualiser les ensembles de format TFCS₀ des différents utilisateurs, et donc d'abaisser la bande passante garantie pour les utilisateurs autres que l'utilisateur de l'émetteur 10. Entre les temps T₃ et T₄, sur demande de ce dernier, un ensemble de niveau supérieur est accordé.

Aux instants T₅ et T₆, des demandes d'autres utilisateurs sont reçues au niveau de l'unité 21 qui décide que la priorité va à ces utilisateurs. Elle augmente donc le niveau de leurs ensembles TFCS respectifs et diminue en conséquence celui de l'émetteur 10₁, car la bande passante n'est pas assez large pour contenter tout le monde.

## Revendications

1. Procédé d'allocation de ressources à un émetteur connecté à un récepteur via un lien de transmission, lesdites ressources étant définies, pour les canaux utilisés par ledit émetteur, par un ensemble de combinaisons de formats de transport pour les données sur ledit lien de transmission,
**caractérisé en ce qu'**une pluralité d'ensembles de combinaisons de formats de transport ayant été alloués audit émetteur au début de la connexion audit récepteur, chaque ensemble de combinaisons de formats de transport étant un sous-ensemble de l'ensemble des combinaisons possibles des formats de transport associés aux dits canaux ;
le récepteur autorise un ensemble de combinaisons de formats de transport appartenant à ladite pluralité, selon les conditions de transport sur le lien de transmission.

2. Procédé d'allocation de ressources selon la revendication 1, **caractérisé en ce qu'**un ensemble de combinaisons de formats de transport d'un rang donné autorisant plus de ressources qu'un ensemble de rang inférieur, le récepteur garantit à un émetteur qui lui est connecté les ressources définies par l'ensemble de combinaisons de formats de transport de plus faible rang qui lui a été alloué au moment où la communication a été établie.

3. Procédé d'allocation de ressources selon la revendication 1 ou 2, **caractérisé en ce qu'**un émetteur qui veut utiliser plus de ressources requiert dudit récepteur, une autorisation pour utiliser un ensemble de combinaisons de formats de transport parmi la pluralité desdits ensembles de combinaisons de formats de transport qui lui ont été alloués au moment où la communication a été établie.

4. Procédé d'allocation de ressources selon la revendication 3, **caractérisé en ce que**, pour former une requête en supplément de ressources, un émetteur transmet au récepteur un message correspondant à l'ensemble de combinaisons de formats de transport qu'il requiert.

5. Procédé d'allocation de ressources selon la revendication 4, **caractérisé en ce qu'**un émetteur qui requiert un supplément de ressources le fait sur la base de l'occupation de ses mémoires tampon.

6. Procédé d'allocation de ressources selon la revendication 4 ou 5, **caractérisé en ce que** ledit message formé par un émetteur qui requiert un supplément de ressources est un pointeur sur l'ensemble de combinaisons de formats de transport requis.

7. Procédé d'allocation de ressources selon la revendication 3, **caractérisé en ce que** pour former une requête en supplément de ressources, un émetteur transmet au récepteur un message correspondant à l'état d'occupation de ses mémoires tampon, le récepteur déterminant à la réception de celui-ci l'ensemble de combinaisons de formats de transport le plus approprié audit émetteur.

8. Procédé d'allocation de ressources selon l'une des revendications précédentes, **caractérisé en ce que**, pour autoriser l'utilisation d'un ensemble de combinaisons de formats de transport, le récepteur transmet à un émetteur concerné, un message comprenant un pointeur sur ledit ensemble, ledit émetteur, à la réception dudit message, en déduisant ledit ensemble.

9. Procédé d'allocation de ressources selon l'une des revendications précédentes, **caractérisé en ce que** ladite pluralité de combinaisons de formats de transport est stockée du côté du récepteur.
